# EUROPEAN PATENT SPECIFICATION

(11) **EP 3 647 717 B1**
(45) Date of publication and mention of the grant of the patent: **27.04.2022**
(21) Application number: 19201482.7
(22) Date of filing: 04.10.2019
(51) Int. Cl.: G01B 21/16, G01M 17/013, G01M 13/026, G01B 5/00, B23Q 3/06, B23Q 17/22

(54) **WHEEL SPACE DETECTING DEVICE**
RADRAUMERFASSUNGSVORRICHTUNG
DISPOSITIF DE DÉTECTION D'ESPACE DE ROUE

(30) Priority: 02.11.2018 CN 201811298010
(43) Date of publication of application: 06.05.2020
(73) Proprietor: CITIC Dicastal Co., Ltd, Qinhuangdao, Hebei 066011 (CN)
(72) Inventor: LIU, Weidong, Qinhuangdao, Hebei 066011 (CN); ZHANG, Na, Qinhuangdao, Hebei 066011 (CN); YUE, Liangjian, Qinhuangdao, Hebei 066011 (CN); WANG, Yingfeng, Qinhuangdao, Hebei 066011 (CN)
(74) Representative: Gerauer, Marc Philippé

(56) References cited:
- EP-A1- 1 830 157
- CN-A- 107 907 081
- CN-A- 108 709 737
- US-A1- 2018 149 471

## Description

### Field of the Invention

The present invention relates to a wheel space detecting device, specifically to a device for automatically detecting a wheel brake space after the completion of wheel machining process.

### Background of the Invention

As safety parts and exterior parts of a vehicle, wheels need to be assembled on the vehicle. At the same time, the wheel back cavity needs to be equipped with a brake drum, a speed sensor, a balance block and other devices. Therefore, the brake space of the wheel back cavity needs to be comprehensively compatible with the spatial positions of the brake drum, the speed sensor and the balance block. Enterprises usually detect whether the brake space is qualified by adopting a matching gauge such as a detection plate. Such a detection method has the problems of low efficiency, high labor intensity and poor detection effect. The present invention introduces a device for automatically detecting a wheel brake space, which effectively solves the above problems.

EP1830157 A1, CN 107 907 081 A and CN 108 709 737 A disclose wheel detecting devices each with a clamping and centering mechanism.

### Summary of the Invention

The objective of the present invention is to provide a wheel space detecting device.

In order to achieve the above objective, the technical solution of the present invention is: A wheel space detecting device according to the present invention consists of a frame 1, a servo motor A 2, a bottom plate 3, an adapter shaft 4, a shaft sleeve 5, a radial bearing 6, a lower end cap 7, a pedestal 8, a pressure bearing 9, a base 10, a clamping cylinder 11, linear guide rails A 12, guide rail sliding seats A 13, sliding seat frames A 14, racks 15, sleeves A 16, bearings A 17, rotating shafts 18, end caps A 19, clamping wheels 20, a guide rail 21, a sleeve B 22, a bearing B 23, an end cap B 24, a shaft 25, gears 26, a lead screw A 27, a guide rail sliding seat B 28, a linear guide rail B 29, a sliding frame B 30, a lead screw nut A 31, a servo motor B 32, a servo motor C 33, a lead screw B 34, a lead screw nut B 35, a sliding frame C 36, a guide rail sliding seat C 37, a linear guide rail C 38, a probe holder 39, and a probe 40.

The servo motor A 2, the pedestal 8 and the shaft sleeve 5 are mounted on the frame 1 through the bottom plate 3; the output shaft of the servo motor A 2 is connected to the base 10 through the adapter shaft 4; the radial bearings 6 is connected to the shaft sleeve 5 and the base 10 respectively and enclosed in the shaft sleeve 5 and the base 10 by the lower end cap 7; the pressure bearing 9 is mounted on the pedestal 8 and connected to the base 10. Through the pressure bearing 9 and the radial bearing 6, the servo motor A 2 can drive the base 10 to rotate around the axis of the radial bearing 6 with high precision.

The guide rail 21, the clamping cylinder 11, the linear guide rails A 12 and the sleeve B 22 are mounted on the base 10; the bearing B 23 and the shaft 25 are enclosed in the sleeve B 22 through the end cap B 24, and the gear 26 is mounted at the upper end of the shaft 25. Left and right clamping execution structures are symmetrically mounted on the base 10, and the sliding seat frame A 14 is connected to the linear guide rail A 12 through the guide rail sliding seat A 13; one side of the rack 15 is fixed on the sliding seat frame A 14, and the other side is engaged with the gear 26; the sleeve A 16 is fixed on the sliding seat frame A 14 and enclosed inside the sleeve A 16 through the end cap A 19, the bearing A 17 and the rotating shaft 18, and the clamping wheels 20 are mounted at the upper end of the rotating shaft 18; each of the left and right clamping execution structures is provided with two clamping wheels 20 distributed symmetrically; the output shaft of the clamping cylinder 11 is connected to the left sliding seat frame A 14. Through the synchronization mechanism of the racks 15 and the gear 26, the clamping cylinder 11 can drive the four uniformly distributed clamping wheels 20 in the left-right symmetric clamping execution structures to move synchronously horizontally and concentrically along the linear guide rails A 12 to achieve high-precision clamping and loosening of a wheel.

The linear guide rail B 29 and the servo motor B 32 are mounted on the guide rail sliding seat C 37; the sliding frame B 30 is connected to the linear guide rail B 29 through the guide rail sliding seat B 28; one end of the lead screw A 27 is connected to the servo motor B 32; the lead screw nut A 31 is mounted on the guide rail sliding seat B 28 and meshes with the lead screw A 27; the probe 40 is mounted on the sliding frame B 30 through the probe holder 39. The probe 40 can be controlled to move horizontally along the linear guide rail B 29 by controlling the steering and the number of revolutions of the servo motor B 32.

The linear guide rail C 38 and the servo motor C 33 are mounted on the frame 1; the sliding frame C 36 is connected to the linear guide rail C 38 through the guide rail sliding seat C 37; one end of the lead screw B 34 is connected to the servo motor C 33; the lead screw nut B 35 is mounted on the guide rail sliding seat C 37 and meshes with the lead screw B 34. The sliding frame C 36 can be controlled to move horizontally along the linear guide rail C 38 by controlling the steering and the number of revolutions of the servo motor C 33.

According to the requirements of a wheel detection space, a control system is further configured to comprehensively control the steering and the number of revolutions of the servo motor B 32 and the servo motor C 33 through a pre-written running program to control the probe 40 to move linearly along the wheel assembly space.

The present invention can meet the needs of wheel brake space detection, has the characteristics of simple structure, stable detection performance, high positioning precision, simple operation and the like, and therefore is very suitable for automatic batch production.

### Brief Description of the Drawing

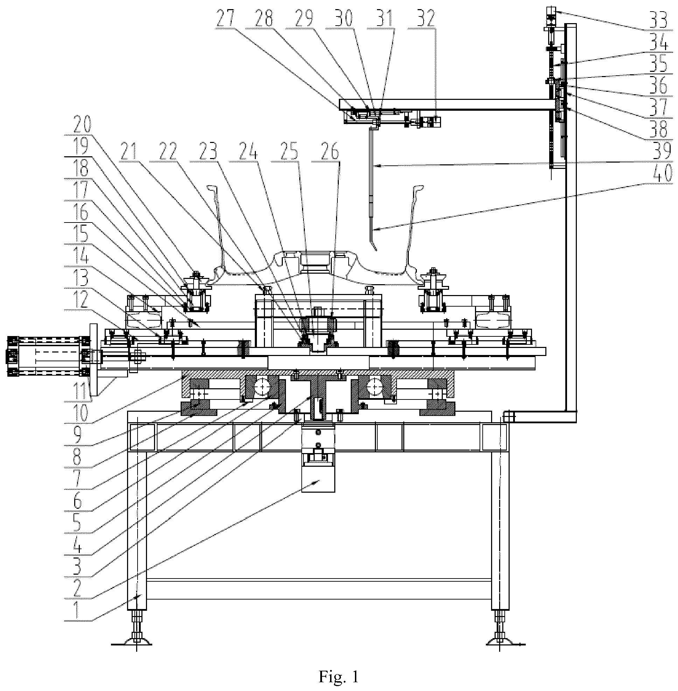

FIG. 1 is a structure diagram of a wheel space detecting device according to the present invention.

In which, 1-frame, 2-servo motor A, 3-bottom plate, 4-adapter shaft, 5-shaft sleeve, 6-radial bearing, 7-lower end cap, 8-pedestal, 9-pressure bearing, 10-base, 11-clamping cylinder, 12-linear guide rail A, 13-guide rail sliding seat A, 14-sliding seat frame A, 15-rack, 16-sleeve A, 17-bearing A, 18-rotating shaft, 19-end cap A, 20-clamping wheel, 21-guide rail, 22-sleeve B, 23-bearing B, 24-end cap B, 25-shaft, 26-gear, 27-lead screw A, 28-guide rail sliding seat B, 29-linear guide rail B, 30-sliding frame B, 31-lead screw nut A, 32-servo motor B, 33-servo motor C, 34-lead screw B, 35-lead screw nut B, 36- sliding frame C, 37-guide rail sliding seat C, 38-linear guide rail C, 39-probe holder, 40-probe.

In the drawing the letters A, B and C are omitted.

### Detailed Description of Embodiments

The details and working conditions of the specific device according to the present invention will be described in detail below in combination with the drawing.

A wheel space detecting device according to the present invention consists of a frame 1, a servo motor A 2, a bottom plate 3, an adapter shaft 4, a shaft sleeve 5, a radial bearing 6, a lower end cap 7, a pedestal 8, a pressure bearing 9, a base 10, a clamping cylinder 11, linear guide rails A 12, guide rail sliding seats A 13, sliding seat frames A 14, racks 15, sleeves A 16, bearings A 17, rotating shafts 18, end caps A 19, clamping wheels 20, a guide rail 21, a sleeve B 22, a bearing B 23, an end cap B 24, a shaft 25, gears 26, a lead screw A 27, a guide rail sliding seat B 28, a linear guide rail B 29, a sliding frame B 30, a lead screw nut A 31, a servo motor B 32, a servo motor C 33, a lead screw B 34, a lead screw nut B 35, a sliding frame C 36, a guide rail sliding seat C 37, a linear guide rail C 38, a probe holder 39, and a probe 40.

The servo motor A 2, the pedestal 8 and the shaft sleeve 5 are mounted on the frame 1 through the bottom plate 3; the output shaft of the servo motor A 2 is connected to the base 10 through the adapter shaft 4; the radial bearings 6 is connected to the shaft sleeve 5 and the base 10 respectively and enclosed in the shaft sleeve 5 and the base 10 by the lower end cap 7; the pressure bearing 9 is mounted on the pedestal 8 and connected to the base 10. Through the pressure bearing 9 and the radial bearing 6, the servo motor A 2 can drive the base 10 to rotate around the axis of the radial bearing 6 with high precision.

The guide rail 21, the clamping cylinder 11, the linear guide rails A 12 and the sleeve B 22 arc mounted on the base 10; the bearing B 23 and the shaft 25 arc enclosed in the sleeve B 22 through the end cap B 24, and the gear 26 is mounted at the upper end of the shaft 25. Left and right clamping execution structures are symmetrically mounted on the base 10, and the sliding seat frame A 14 is connected to the linear guide rail A 12 through the guide rail sliding seat A 13; one side of the rack 15 is fixed on the sliding seat frame A 14, and the other side is engaged with the gear 26; the sleeve A 16 is fixed on the sliding seat frame A 14 and enclosed inside the sleeve A 16 through the end cap A 19, the bearing A 17 and the rotating shaft 18, and the clamping wheels 20 are mounted at the upper end of the rotating shaft 18; each of the left and right clamping execution structures is provided with two clamping wheels 20 distributed symmetrically; the output shaft of the clamping cylinder 11 is connected to the left sliding seat frame A 14. Through the synchronization mechanism of the racks 15 and the gear 26, the clamping cylinder 11 can drive the four uniformly distributed clamping wheels 20 in the left-right symmetric clamping execution structures to move synchronously horizontally and concentrically along the linear guide rails A 12 to achieve high-precision clamping and loosening of a wheel.

The linear guide rail B 29 and the servo motor B 32 are mounted on the guide rail sliding seat C 37; the sliding frame B 30 is connected to the linear guide rail B 29 through the guide rail sliding seat B 28; one end of the lead screw A 27 is connected to the servo motor B 32; the lead screw nut A 31 is mounted on the guide rail sliding seat B 28 and meshes with the lead screw A 27; the probe 40 is mounted on the sliding frame B 30 through the probe holder 39. The probe 40 can be controlled to move horizontally along the linear guide rail B 29 by controlling the steering and the number of revolutions of the servo motor B 32.

The linear guide rail C 38 and the servo motor C 33 are mounted on the frame 1; the sliding frame C 36 is connected to the linear guide rail C 38 through the guide rail sliding seat C 37; one end of the lead screw B 34 is connected to the servo motor C 33; the lead screw nut B 35 is mounted on the guide rail sliding seat C 37 and meshes with the lead screw B 34. The sliding frame C 36 can be controlled to move horizontally along the linear guide rail C 38 by controlling the steering and the number of revolutions of the servo motor C 33.

According to the requirements of a wheel detection space, a control system comprehensively controls the steering and the number of revolutions of the servo motor B 32 and the servo motor C 33 through a pre-written running program to control the probe 40 to move linearly along the wheel assembly space.

In actual use, the wheel is transported directly above the device by a transport system, compressed air is introduced, and the clamping cylinder 11 can drive the four uniformly distributed clamping wheels 20 in the left and right symmetric clamping execution structures through the synchronization mechanism of the racks 15 and the gear 26 to move synchronously and concentrically along the linear guide rails A 12 to achieve high-precision clamping of the wheel. Then, the servo motor A 2 starts to work, and the base 10 and the wheel are driven through the pressure bearing 9 and the radial bearing 6 to rotate around the axis of the radial bearing 6 with high precision. According to the requirements of the wheel detection space, a wheel assembly space detecting program is pre-written, the control system of the device comprehensively controls the steering and the number of revolutions of the servo motor B 32 and the servo motor C 33 through the pre-input space detecting program to control the probe 40 to move linearly along the wheel assembly space, the probe 40 synchronously feeds back distance information between wheels to an analysis system of the device, and the analysis system compares the acquired information with the requirements of the wheel product standards, and determines whether the assembly space of the wheel is qualified. So far, the assembly space detection on the wheel is completed.

## Claims

1. A wheel space detecting device, consists of a frame 1, a servo motor A 2, a bottom plate 3, an adapter shaft 4, a shaft sleeve 5, a radial bearing 6, a lower end cap 7, a pedestal 8, a pressure bearing 9, a base 10, a clamping cylinder 11, linear guide rails A 12, guide rail sliding seats A 13, sliding seat frames A 14, racks 15, sleeves A 16, bearings A 17, rotating shafts 18, end caps A 19, clamping wheels 20, a guide rail 21, a sleeve B 22, a bearing B 23, an end cap B 24, a shaft 25, gears 26, a lead screw A 27, a guide rail sliding seat B 28, a linear guide rail B 29, a sliding frame B 30, a lead screw nut A 31, a servo motor B 32, a servo motor C 33, a lead screw B 34, a lead screw nut B 35, a sliding frame C 36, a guide rail sliding seat C 37, a linear guide rail C 38, a probe holder 39, and a probe 40, wherein
the servo motor A 2, the pedestal 8 and the shaft sleeve 5 are mounted on the frame 1 through the bottom plate 3; the output shaft of the servo motor A 2 is connected to the base 10 through the adapter shaft 4; the radial bearings 6 is connected to the shaft sleeve 5 and the base 10 respectively and enclosed in the shaft sleeve 5 and the base 10 by the lower end cap 7; the pressure bearing 9 is mounted on the pedestal 8 and connected to the base 10, through the pressure bearing 9 and the radial bearing 6, whereby the servo motor A 2 is configured to drive the base 10 to rotate around the axis of the radial bearing 6 with high precision,
the guide rail 21, the clamping cylinder 11, the linear guide rails A 12 and the sleeve B 22 are mounted on the base 10; the bearing B 23 and the shaft 25 are enclosed in the sleeve B 22 through the end cap B 24, and the gear 26 is mounted at the upper end of the shaft 25, left and right clamping execution structures are symmetrically mounted on the base 10, and the sliding seat frame A 14 is connected to the linear guide rail A 12 through the guide rail sliding seat A 13; one side of the rack 15 is fixed on the sliding seat frame A 14, and the other side is engaged with the gear 26; the sleeve A 16 is fixed on the sliding seat frame A 14 and enclosed inside the sleeve A 16 through the end cap A 19, the bearing A 17 and the rotating shaft 18, and the clamping wheels 20 are mounted at the upper end of the rotating shaft 18; each of the left and right clamping execution structures is provided with two clamping wheels 20 distributed symmetrically; the output shaft of the clamping cylinder 11 is connected to the left sliding seat frame A 14, through the synchronization mechanism of the racks 15 and the gear 26, so that the clamping cylinder 11 can drive the four uniformly distributed clamping wheels 20 in the left-right symmetric clamping execution structures to move synchronously horizontally and concentrically along the linear guide rails A 12 to achieve high-precision clamping and loosening of a wheel,
the linear guide rail B 29 and the servo motor B 32 are mounted on the guide rail sliding seat C 37; the sliding frame B 30 is connected to the linear guide rail B 29 through the guide rail sliding seat B 28; one end of the lead screw A 27 is connected to the servo motor B 32; the lead screw nut A 31 is mounted on the guide rail sliding seat B 28 and meshes with the lead screw A 27; the probe 40 is mounted on the sliding frame B 30 through the probe holder 39, the probe 40 being controllable to move horizontally along the linear guide rail B 29 by controlling the steering and the number of revolutions of the servo motor B 32,
the linear guide rail C 38 and the servo motor C 33 are mounted on the frame 1, the sliding frame C 36 is connected to the linear guide rail C 38 through the guide rail sliding seat C 37, one end of the lead screw B 34 is connected to the servo motor C 33, the lead screw nut B 35 is mounted on the guide rail sliding seat C 37 and meshes with the lead screw B 34, the sliding frame C 36 being controllable to move horizontally along the linear guide rail C 38 by controlling the steering and the number of revolutions of the servo motor C 33,
a control system configured to control the steering and the number of revolutions of the servo motor B 32 and the servo motor C 33 through a pre-written running program according to the requirements of a wheel detection space to control the probe 40 to move linearly along the wheel assembly space.

## Patentansprüche

1. Vorrichtung zum Erkennen des Raums eines Rades, umfassend einen Rahmen 1, einen Servomotor A2, eine Bodenplatte 3, eine Adapterwelle 4, eine Wellenhülse 5, ein Radiallager 6, eine untere Endkappe 7, einen Sockel 8, ein Drucklager 9, eine Basis 10, einen Klemmzylinder 11, lineare Führungsschienen A 12, Führungsschienen-Gleitsitze A 13, Gleitsitzrahmen A 14, Zahnstangen 15, Hülsen A 16, Lager A 17, Drehwellen 18, Endkappen A 19, Klemmräder 20, eine Führungsschiene 21, eine Hülse B 22, ein Lager B 23, eine Endkappe B 24, eine Welle 25, Zahnräder 26, eine Leitspindel A 27, einen Führungsschienen-Gleitsitz B 28, eine lineare Führungsschiene B 29, einen Gleitrahmen B 30, eine Leitspindelmutter A 31, einen Servomotor B 32, einen Servomotor C 33, eine Leitspindel B 34, eine Leitspindelmutter B 35, einen Gleitrahmen C 36, einen Führungsschienen-Gleitsitz C 37, eine lineare Führungsschiene C 38, einen Sondenhalter 39 und eine Sonde 40,
wobei der Servomotor A 2, der Sockel 8 und die Wellenhülse 5 über die Bodenplatte 3 an dem Rahmen 1 montiert sind; und wobei die Ausgangswelle des Servomotors A 2 über die Adapterwelle 4 mit der Basis 10 verbunden ist; und wobei das Radiallager 6 jeweils mit der Wellenhülse 5 und der Basis 10 verbunden und durch die untere Endkappe 7 in der Wellenhülse 5 und der Basis 10 eingeschlossen ist; und wobei das Drucklager 9 an dem Sockel 8 montiert und über das Drucklager 9 und das Radiallager 6 mit der Basis 10 verbunden ist, wodurch der Servomotor A2 so konfiguriert ist, dass er die Basis 10 dazu antreibt, sich um die Achse des Radiallagers 6 mit hoher Präzision zu drehen,
und wobei die Führungsschiene 21, der Klemmzylinder 11, die linearen Führungsschienen A 12 und die Hülse B 22 an der Basis 10 montiert sind; und wobei das Lager B 23 und die Welle 25 über die Endkappe B 24 in der Hülse B 22 eingeschlossen sind, und wobei das Zahnrad 26 am oberen Ende der Welle 25 montiert ist, und wobei linke und rechte Klemmausführungsstrukturen symmetrisch an der Basis 10 montiert sind, und wobei der Gleitsitzrahmen A 14 über den Führungsschienen-Gleitsitz A 13 mit der linearen Führungsschiene A 12 verbunden ist; und wobei eine Seite der Zahnstange 15 an dem Gleitsitzrahmen A 14 befestigt ist und die andere Seite mit dem Zahnrad 26 in Eingriff steht; und wobei die Hülse A 16 an dem Gleitsitzrahmen A 14 befestigt und über die Endkappe A 19, das Lager A 17 und die Drehwelle 18 innerhalb der Hülse A 16 eingeschlossen ist, und wobei die Klemmräder 20 am oberen Ende der Drehwelle 18 montiert sind; und wobei jede der linken und rechten Klemmausführungsstrukturen mit zwei symmetrisch verteilten Klemmrädern 20 versehen ist; und wobei die Ausgangswelle des Klemmzylinders 11 über den Synchronisationsmechanismus der Zahnstangen 15 und das Zahnrad 26 mit dem linken Gleitsitzrahmen A 14 verbunden ist, so dass der Klemmzylinder 11 die vier gleichmäßig verteilten Klemmräder 20 in den links-rechts-symmetrischen Klemmausführungsstrukturen dazu antreiben kann, sich synchron horizontal und konzentrisch entlang der linearen Führungsschienen A 12 zu bewegen, um ein hochpräzises Klemmen und Lösen eines Rades zu realisieren,
und wobei die lineare Führungsschiene B 29 und der Servomotor B 32 an dem Führungsschienen-Gleitsitz C 37 montiert sind; und wobei der Gleitrahmen B 30 über den Führungsschienen-Gleitsitz B 28 mit der linearen Führungsschiene B 29 verbunden ist; und wobei ein Ende der Leitspindel A 27 mit dem Servomotor B 32 verbunden ist; und wobei die Leitspindelmutter A 31 an dem Führungsschienen-Gleitsitz B 28 montiert ist und mit der Leitspindel A 27 kämmt; und wobei die Sonde 40 über den Sondenhalter 39 an dem Gleitrahmen B 30 montiert ist, und wobei die Sonde 40 steuerbar ist, um sich horizontal entlang der linearen Führungsschiene B 29 zu bewegen, indem die Lenkung und die Drehzahl des Servomotors B 32 gesteuert werden,
und wobei die lineare Führungsschiene C 38 und der Servomotor C 33 an dem Rahmen 1 montiert sind, und wobei der Gleitrahmen C 36 über den Führungsschienen-Gleitsitz C 37 mit der linearen Führungsschiene C 38 verbunden ist, und wobei ein Ende der Leitspindel B 34 mit dem Servomotor C 33 verbunden ist, und wobei die Leitspindelmutter B 35 an dem Führungsschienen-Gleitsitz C 37 montiert ist und mit der Leitspindel B 34 kämmt, und wobei der Gleitrahmen C 36 steuerbar ist, um sich horizontal entlang der linearen Führungsschiene C 38 zu bewegen, indem die Lenkung und die Drehzahl des Servomotors C 33 gesteuert werden,
ein Steuersystem, das dazu konfiguriert ist, die Lenkung und die Drehzahl des Servomotors B 32 und des Servomotors C 33 durch ein vorab geschriebenes Laufprogramm gemäß den Anforderungen eines Raddetektionsraums zu steuern, um die Sonde 40 dazu anzusteuern, sich linear entlang dem Radmontageraum zu bewegen.

## Revendications

1. Dispositif de détection d'espace de roues, comprenant un cadre 1, un servomoteur A 2, une plaque de fond 3, un arbre adaptateur 4, une chemise d'arbre 5, un palier radial 6, un couvercle en bout inférieur 7, un piédestal 8, un palier sous pression 9, une base 10, un cylindre de serrage 11, des rails de guidage linéaires A 12, des sièges coulissants de rail de guidage A 13, des cadres de siège coulissant A 14, des crémaillères 15, des manchons A 16, des paliers A 17, des arbres rotatifs 18, des couvercles en bouts A 19, des roues de serrage 20, un rail de guidage 21, un manchon B 22, un palier B 23, un couvercle en bout B 24, un arbre 25, des engrenages 26, une vis mère A 27, un siège coulissant de rail de guidage B 28, un rail de guidage linéaire B 29, un cadre coulissant B 30, un écrou de vis mère A 31, un servomoteur B 32, un servomoteur C 33, une vis mère B 34, un écrou de vis mère B 35, un cadre coulissant C 36, un siège coulissant de rail de guidage C 37, un rail de guidage linéaire C 38, un porte-sonde 39 et une sonde 40, dans lequel,
le servomoteur A 2, le piédestal 8 et la chemise d'arbre 5 sont montés au cadre 1 par l'intermédiaire de la plaque de fond 3 ; l'arbre de sortie du servomoteur A 2 est relié à la base 10 par l'intermédiaire de l'arbre adaptateur 4 ; le palier radial 6 est relié respectivement à la chemise d'arbre 5 et à la base 10 et enfermés à l'intérieur de la chemise d'arbre 5 et de la base 10 par le couvercle en bout inférieur 7 ; le palier sous pression 9 est monté sur le piédestal 8 et relié à la base 10 par l'intermédiaire du palier sous pression 9 et du palier radial 6, le servomoteur A 2 étant configuré pour entraîner la base 10 à tourner autour de l'axe du palier radial 6 avec une haute précision,
le rail de guidage 21, le cylindre de serrage 11, les rails de guidage linéaires A 12 et le manchon B 22 sont montés sur la base 10 ; le palier B 23 et l'arbre 25 sont enfermés à l'intérieur du manchon B 22 par l'intermédiaire du couvercle en bout B 24, et l'engrenage 26 est monté à l'extrémité supérieure de l'arbre 25, des structures d'exécution de serrage gauche et droite sont montées de manière symétrique sur la base 10, et le cadre de siège coulissant A 14 est relié au rail de guidage linéaire A 12 par l'intermédiaire du siège coulissant de rail de guidage A 13 ; la crémaillère 15 est fixée par un côté sur le cadre de siège coulissant A 14, et l'autre côté est engagé avec l'engrenage 26 ; le manchon A 16 est fixé sur le cadre de siège coulissant A 14 et enfermé à l'intérieur du manchon A 16 par l'intermédiaire du couvercle en bout A 19, du palier A 17 et de l'arbre rotatif 18, et les roues de serrage 20 sont montés à l'extrémité supérieure de l'arbre rotatif 18 ; chacune des structures d'exécution de serrage gauche et droite est prévue de deux roues de serrage 20 réparties de manière symétrique ; l'arbre de sortie du cylindre de serrage 11 est relié au cadre de siège coulissant gauche A 14 par l'intermédiaire d'un mécanisme de synchronisation des crémaillères 15 et de l'engrenage 26, de sorte que le cylindre de serrage 11 puisse entraîner les quatre roues de serrage 20 réparties de manière uniforme dans des structures d'exécution de serrage symétriques gauche-droite à se déplacer de manière synchrone horizontalement et concentriquement le long des rails de guidage linéaires A 12, obtenant ainsi un serrage et un desserrage d'une roue avec une haute précision,
le rail de guidage linéaire B 29 et le servomoteur B 32 sont montés sur le siège coulissant de rail de guidage C 37 ; le cadre coulissant B 30 est relié au rail de guidage linéaire B 29 par l'intermédiaire du siège coulissant de rail de guidage B 28 ; une extrémité de la vis mère A 27 est reliée au servomoteur B 32 ; l'écrou de vis mère A 31 est monté sur le siège coulissant de rail de guidage B 28 et s'engrène avec la vis mère A 27 ; la sonde 40 est montée sur le cadre coulissant B 30 par l'intermédiaire du porte-sonde 39, la sonde 40 pouvant être commandée à se déplacer horizontalement le long du rail de guidage linéaire B 29 en commandant la direction et le nombre de tours du servomoteur B 32,
le rail de guidage linéaire C 38 et le servomoteur C 33 sont montés sur le cadre 1, le cadre coulissant C 36 est relié au rail de guidage linéaire C 38 par l'intermédiaire du siège coulissant de rail de guidage C 37, une extrémité de la vis mère B 34 est reliée au servomoteur C 33, l'écrou de vis mère B 35 est monté sur le siège coulissant de rail de guidage C 37 et s'engrène avec la vis mère B 34, le cadre coulissant C 36 pouvant être commandé à se déplacer horizontalement le long du rail de guidage linéaire C 38 en commandant la direction et le nombre de tours du servomoteur C 33,
un système de commande configuré pour commander la direction et le nombre de tours du servomoteur B 32 et du servomoteur C 33 par un programme de fonctionnement pré-écrit selon les exigences sur un espace de détection de roues pour commander la sonde 40 à se déplacer de manière linéaire le long de l'espace de montage de roues.
